(19) Europäisches Patentamt
European Patent Office
Office européen des brevets

(11) Veröffentlichungsnummer: **0 281 134 B1**

(12) **EUROPÄISCHE PATENTSCHRIFT**

(45) Veröffentlichungstag der Patentschrift: **12.02.92**

(51) Int. Cl.$^5$: **C09D 17/00**, D21H 17/44

(21) Anmeldenummer: **88103291.6**

(22) Anmeldetag: **03.03.88**

# (54) Kationisch eingestellte Pigmentdispersion und Streichfarbe.

(30) Priorität: **06.03.87 DE 3707221**

(43) Veröffentlichungstag der Anmeldung:
**07.09.88 Patentblatt 88/36**

(45) Bekanntmachung des Hinweises auf die Patenterteilung:
**12.02.92 Patentblatt 92/07**

(84) Benannte Vertragsstaaten:
**AT BE CH DE ES FR GB IT LI NL SE**

(56) Entgegenhaltungen:
**BE-A- 881 397**
**CH-A- 642 980**

**ABSTRACT BULLETIN OF THE INSTITUT OP PAPER CHEMISTRY, Band 57, Nr. 4, Oktober 1986, Seite 610, Zusammenfassung Nr. 5438, Appleton, Wisconsin, US; & JP-A-85 215 895 (SUMITOMO NAUGATUCK CO. LTD) 29-10-1985**

**Zellstoff und Papier 1979/5 P.203 Angew. Chem/87 Jahrg. 1975/Nr.16 p.561**

(73) Patentinhaber: **MD Papier GmbH**
**Ostenstrasse 5**
**W-8060 Dachau(DE)**

(72) Erfinder: **Weigl, Josef**
**Riederstrasse 31**
**W-8000 München 60(DE)**
Erfinder: **Hofmann, Hans-Peter**
**Hermann-Stockmann-Strasse 86**
**W-8060 Dachau(DE)**
Erfinder: **von Raven, Axel, Dr.**
**Dollstrasse 8**
**W-8124 Seeshaupt(DE)**

(74) Vertreter: **Reitzner, Bruno, Dr.**
**Patentanwälte Dipl.-Ing. R. Splanemann Dr. B. Reitzner, Dipl.-Ing. K. Baronetzky Tal 13**
**W-8000 München 2(DE)**

**EP 0 281 134 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft kationisch eingestellte Pigmentdispersionen sowie Streichfarben für die Papierbeschichtung.

Die zur Herstellung von Streichfarben verwendeten Streichpigmente, die im trockenen Zustand angeliefert werden, haben eine anionische Grenzflächenladung, und die Pigmentteilchen liegen gewöhnlich als Agglomerate bzw. grobteilige Aggregate vor, die sich sowohl auf die Verarbeitung der Streichfarbe als auch auf die Strichqualität nachteilig auswirken. Für eine optimale Anwendung der Füllstoffe und Streichpigmente bei der Papierherstellung und -veredelung sollen die einzelnen Teilchen als Primärteilchen, d.h. entflockt, vorliegen.

Zur Dispergierung der Agglomerate ist eine kombinierte Anwendung von geeigneten Dispergiergeräten und der Einsatz von chemischen Hilfsmnitteln erforderlich. Eine optimale Dispergierung stellt sicher, daß die Anziehungskräfte zwischen den Teilchen eliminiert werden oder diesen entgegengewirkt wird, so daß eine Reagglomeration der Pigmentteilchen nach der Herstellung der Dispersion verhindert wird.

Die gebräuchlichsten anorganischen und organischen Dispergiermittel, die in der Papierindustries eingesetzt werden, sind fast ausschließlich polyanionisch (z.B. Polyphosphate und Polyacrylate). Durch diese Dispergiermittel werden die Pigmentagglomerate zu Primärteilchen aufgebrochen, wodurch die optischen Eigenschaften der mit den Streichfarben gestrichenen Papiere verbessert werden, da feinere Teilchen einen besseren Papier und Druckglanz geben. Auch können durch die Dispergierung Pigmentslurries and somit Streichfarben mit einem hohem Feststoffgehalt erhalten werden, die auch bei erhöhter Lager- und Verarbeitungstemperatur nicht zum vorzeitigen Ausflocken neigen. Die anionischen Dispergiermittel haben jedoch eine Reihe von Nachteilen.

Bei der Anlagerung von Dispergiermittel an die Pigmentteilchen werden diese in ihrer negativen Ladung verstärkt, wodurch eine Verringerung der Adsorption der üblicherweise verwendeten anionischen Bindemittel (z.B. Stärke, Acrylsäureester, Styrol-Butadien-Latex, Polyvinylacetate, Polyvinylalkohol) an den Pigmentteilchen eintritt. Ferner tritt eine verstärkte Bindemittelwanderung in das Basispapier sowie an die Strichoberfläche auf.

Weiterhin ergibt sich eine Erniedrigung des Sedimentvolumens der Streichfarbe und damit geringeres Strichvolumen und eine schlechtere Faserabdeckung.

Schließlich können Beeinträchtigungen der Produktion durch ungewollte Wechselwirkungen mit kationischen Hilfsmitteln bei der Papierherstellung, insbesondere Ausflockungen, auftreten, wenn die Streichfarben bzw. der gestrichene Ausschuß in den Papierherstellungsprozeß zurückgeführt werden.

Die negativen Auswirkungen der anionischen Dispergiermittel können in einem gewissen Grad durch eine Ladungsreduzierung mit entsprechenden Bindemitteln (z.B. carboxylgruppenreiche Bindemittel) und durch den Zusatz von niedermolekularen kationischen Hilfsmitteln, sogenannten Immobilisierungsmitteln, behoben werden. Problematisch ist jedoch immer noch die Produktionsbeeinträchtigung durch verschiedene anionische Dispergiermittel, die über den Streichausschuß bzw. die Streichfarbenrückführung in den Papierherstellungsprozeß gelangen. Die anionischen Dispergiergiermittel treten in ungewollte Wechselwirkung mit den kationischen Hilfsmitteln, wodurch ein Mehrverbrauch an kationischen Hilfsmitteln erforderlich wird. Außerdem wirkt das entstandene Koazervat (Wechselwirkungsprodukt) als Störstoff bei dem Papierherstellungsprozeß.

Zur Behebung dieser Nachteile wurde bereits ein theoretisches Konzept entwickelt, das auf dem Gedanken beruht, Streichfarben für die Papierbeschichtung kationisch einzustellen.

Dieses Konzept, das in Verbindung mit einigen Vorversuchen im "Wochenblatt für Papierfabrikation" 6 - (1984), Seiten 176 bis 183 beschrieben ist, beruht darauf, Pigmente in einem, kationischen Dispergiermittel zu dispergieren und auf diese Weise ein kationisiertes Pigment zu erzeugen und die so hergestellte Dispersion mit einem kationischen Bindemittel zu einer Streichfarbe zu verarbeiten. Als kationische Dispergiermittel wurden quaternäre Ammoniumverbindungen, Polyamino-Amid-Fettsäureverbindungen und stark abgebaute niedermolekulare kationische Galaktomannane vorgeschlagen. Als Pigmente, die mit Hilfe dieser Dispergiermittel dispergiert wurden, wurden Kaolin und Calciumcarbonat vorgeschlagen. Die so behandelten Pigmente wurden dann in Form einer wäßrigen Aufschlämmung mit einer gewissen Menge kationischer synthetischer Bindemittel zu einer Streichfarbe verarbeitet.

Bei diesen Untersuchungen zeigte sich, daß

1. nur durch trockenes Ca $CO_3$ die gewünschten Feststoffgehalte - die heute bei der Verarbeitung in der Streichfarbe notwendig sind - erreichbar sind, jedoch nicht mit Kaolin oder anderen Streichpigmenten.
2. auch bei Ca $CO_3$ sehr hohe kationsiche Dispergiermittelmengen notwendig sind, um dieser Feststoffgehalte zu erzielen.
3. trotz Anteilen von ca. 0,15 % an kationischen Polymeren z.B. kationischer Guar, die Pigmente nicht

wie angenommen kationisch waren, sondern noch Zetapotential-(ZP)-Meßergebnisse von -18mV aufwiesen.

4. von der Vielzahl der eingesetzten Binder sich nur ein Binder verarbeiten ließ, d.h. alle übrigen kationischen und amphoteren Binder zu hohe Viskositäten lieferten oder zu Flockungen führten, d.h. nicht verarbeitbar waren.

5. auch der verarbeitbare kationische Binder in deutlich höheren Prozentsätzen im Vergleich zu anionischen Streichfarben zugesetzt werden mußte, um ausreichende Bindekraft zu erzeugen. Neben der Kostenerhöhung resultierte daraus eine Qualitätseinbuße in Bezug auf optische und Bedruckbarkeitseigenschaften.

6. Eine so kationisch eingestellte Streichfarbe hatte im Vergleich zu einer anionisch eingestellten ein niedriges Wasserretentionsvermögen und dadurch schlechtere Laufeigenschaften.

Bei Streichversuchen mit Offset-Papier hatte der Strich zwar eine verhältnismäßig hohe Glätte, jedoch noch eine unzureichende Naßrupffestigkeit.

Die Versuche werden mit einer langsam laufenden Laborstreichmaschine durchgeführt. Hier zeigten sich bereits aufgrund der hohen Viskositäten Laufschwierigkeiten. Bei der Übertragung dieser Streichfarben auf die Praxis zeigten sich

1. Probleme bei der Slurryaufbereitung und -Lagerung infolge
- hoher Viskositätswerte
- hoher Scherempfindlichkeit (Reagglomeration)
- schlechter Siebbarkeit, aufgrund hoher Viskotitätswerte und hoher Agglomerat-Anteile
- schlechter Lagerfähigkeit, d.h. Abtriften der Viskositätswerte nach oben.

2. Probleme bei der Streichfarbenverarbeitung infolge
- Streichfarbeneindickung im Arbeitskreislauf, wegen schlechter Wasserretentionseigenschaften
- hoher thixotroper Fließeigenschaften, wodurch aufgrund schlechter Farbrückspieleigenschaften das Papier streifig wurde
- ungleichmäßiger Strichverteilung.

3. Endqualitätsprobleme infolge
- Strichgewichts- und somit Endgewichtsunterschieden über die Papierbahnbreite sowie ungedeckte Stellen
- schlechtem "coating hold out", lappiger Papierqualität, die bei einem Praxisdruckversuch zu Passerschwierigkeiten und Auslageschwierigkeiten (umgelegte Papierkanten) führte;
- schlechter Naßrupffestigkeit und Offset-Bedruckbarkeit.

Außerdem war es nicht möglich, in schwach saurem Medium zu arbeiten, da die Pigmentdispersion bzw. die Streichfarbe eine Tendenz zum Ausflocken der Pigmentteilchen zeigte.

Eine Streichfarbe in schwach saurem Medium hat aber den Vorteil, daß man mit niedrigen Dispergiermittelmengen bei der Pigmentdispergierung auskommt, aufgrund der guten Dispergierwirkung der Protonen. Weiterhin kann im schwach sauren Medium eine breitere Palette von Bindemitteln eingesetzt werden, wie z.B. amphotere Binder und Bindemittel auf Proteinbasis, die im schwach sauren Bereich ebenfalls kationisch vorliegen. Die saure Fahrweise ist dagegen mit Ca $CO_3$ nicht möglich, aufgrund der Zersetzung des Carbonats.

Kaolin oder andere Streichpigmente konnten bisher nicht so kationisch dispergiert werden, daß bei der Streicherei die gewünschten Feststoffgehalte eingestellt werden konnten, da diese Pigmente hohe anionische Grenzflächenladungen aufweisen. Gleichzeitig waren für die kationische Dispergierung so hohe kationische Dispergiermittelmengen erforderlich, nämlich zwischen 2,5 und 3,5%, die auch von wirtschaftlicher Seite nicht vertretbar sind.

Ausgehend von diesen Nachteilen der bekannten kationisch eingestellten Streichfarben, lag der vorliegenden Erfindung die Aufgabe zugrunde, bei kationisch eingestellten Pigmentdispersionen bzw. Streichfarben (a) die Viskosität zu senken bzw. den Pigmentgehalt zu erhöhen, (b) die Dispergierbarkeit so zu optimieren, daß auch Pigmente mit hohem anionischen Grenzflächenladungen über einen breiten pH-Wert-Bereich verwendet werden können und (c) die Verarbeitungseigenschaften der daraus hergestellten Streichfarben sowie die Endqualitätseigenschaften der mit Hilfe der Streichfarben hergestellten Papiere zu verbessern.

Diese Aufgabe läßt sich mit Hilfe von Pigmentdispersionen lösen, die gekennzeichnet sind durch

(a) eine Pigmentkomponente;

(b) ein die Pigmentteilchen als Schutzkolloid umhüllendes kationisiertes Polymer, das aus hydrophilen Polyacrylaten oder -mechacrylaten, abgebauten Stärken oder abgebauten modifizierten Stärken, Methylcellulosen, Hydroxymethylcellulosen, Carboxymethylcellulosen, abgebauten Alginaten, Proteinen und/oder Polyvinylalkohol erhalten worden ist, wobei durch das kationisierte Polymer das Zeta-Potential

der die umhüllten Pigmentteilchen enthaltenden Dispersion auf den isoelektrischen Punkt bzw. in den kationischen Bereich angehoben ist;

(c) und gegebenenfalls ein kationisches Polymer bzw. eine quaternäre Ammoniumverbindung als Dispergiermittel für die mit dem Schutzkolloid umhüllten und kationisch umgeladenen Pigmentteilchen.

Die bekannte, kationisch eingestellte Pigmentdispersion war zwar mit 0,15 bis 0,3 Gew.-% kationischem Guar mit einem Feststoffgehalt von 70 % dispergiert. Hierdurch wurden jedoch keine kationischen Pigmentoberflächen erzielt, sondern es fand lediglich eine Verschiebung des Zeta-Potentials in Richtung zum isoelektrischen Punkt statt, der aber nicht erreicht wurde.

Von Polyamino-Amid-Fettsäurederivaten, wie sie in der eingangs genannten Veröffentlichung als Dispergiermittel Verwendung fanden, sind zur Umladung hohe Anteile einzusetzen, wodurch scherempfindliche Dispersionen erhalten werden. Ferner kommt es infolge tensider Wirkungen zu ungewollten Adsorptions- und Desorptions-Phänomenen in den Streichfarben sowie zu einer starken Schaumentwicklung.

Die erfindungsgemäßen Pigmentdispersionen sind in ihrer kationischen Form lagerfähig. Außerdem können durch die Verwendung der Schutzkolloide die Anteile an teuren Umladungsmitteln deutlich niedriger gehalten werden. Ferner haben die Schutzkolloide wasserretendierende Eigenschaften sowie gute Pigmentabbindungs-Eigenschaften. Dieser wasserretendierende Effekt ist vor allem bei der Streichfarbenverarbeitung an schnell laufenden Streichmaschinen wichtig, da unter den hohen hydrodynamischen Belastungen bei der Streichfarbvendosierung und -Egalisierung die Streichfarbe bei schlechter Wasserretention mobilisierend wirkendes Wasser, Binde- und Hilfsmittel an das Rohpapier verliert, wodurch starke Verarbeitungs- und Endqualitätsprobleme, wie sie vorstehend geschildert wurden, auftreten.

Das als Komponente (c) gegebenenfalls verwendete Dispergiermittel ist vorzugsweise eine oligomere oder polymere quaternäre Ammoniumverbindung. Derartige Verbindungen haben gegenüber niedermolekularen quaternären Ammoniumverbindungen mit niedriger Ladungsdichte den Vorteil, daß die Umladung bei geringeren Zugabemengen schneller erfolgt und ein positives Zeta-Potential erreicht wird.

Das kationische Polymer wird vorzugsweise durch Umsetzung der hydrophilen Ausgangspolymeren mit stickstoffhaltigen Verbindungen und Quaternisierung der Umsetzungsprodukte erhalten.

Die Pigmentkomponente (a) ist vorzugsweise aus gemahlenem bzw. gefälltem Calciumcarbonat, Kaolin, calciniertem Kaolin, Titandioxid, Zinkoxid, Satinweiß, Aluminiumhydrosilikat bzw. aus deren Abmischungen zusammengesetzt. Ein besonderer Vorteil der vorliegenden Erfindung besteht darin, daß auch stark anionische Pigmente, wie Kaolin, verwendet werden können. Ferner können diese Pigmente (ausgenommen Calciumcarbonat und Zinkoxid) auch bei schwach saurem pH-Wert verwendet werden. Dies hat den Vorteil, daß die Menge des Dispergiermittels (c) noch weiter herabgesetzt werden kann bzw. Streichfarben mit höheren Feststoffgehalten erzielt werden können.

Die Kationisierung der Schutzkolloide erfolgt vorzugsweise durch Umsetzung der hydrophilen Ausgangspolymeren mit stickstoffhaltigen Verbindungen und Quaternisierung der Umsetzungsprodukte bzw. durch Umsetzung mit einem kationischen Polymer aus der Gruppe der Melamin-Formaldehydharze, Epichlorhydrinharze, Dicyandiamidharze, quaternären Acrylate, der polymeren Diallylverbindung oder der polymeren Guanidinverbindungen. Diese kationischen Polymeren werden auch bevorzugt für das gegebenenfalls verwendete kationische Polymer (c) eingesetzt.

Das Schutzkolloid (b) kann auch von vornherein kationisiert sein. Zu diesen Verbindungen zählen z.B. Proteine bei schwach saurem pH-Wert. Vorzugsweise ist das Schutzkolloid jedoch ein Umsetzungsprodukt aus einer oder mehreren Substanzen mit ursprünglich anionischem Charakter aus der Gruppe der Polyacrylate und -methacrylate, abgebauten Stärken, Methylcellulosen, Hydroxymethylcellulosen, Carboxymethylcellulosen, abgebauten Alginaten und einem oder mehreren kationischen Polymeren aus der Gruppe der Melamin-Formaldehydharze, Epichlorhydrinharze, polymeren Diallylverbindungen, polymeren Guanidinverbindungen und Dicyandiamidharzen. Bei Polyvinylalkoholen handelt es sich um nichtionogene Verbindungen, aus denen ebenfalls kationiserte Schutzkolloide hergestellt werden können.

Das kationisierte Schutzkolloid (b) kann auch das Umsetzungsprodukt aus einer oder mehreren der vorstehend angegebenen Substanze mit ursprünglich anionischem Charakter und einer quaternären Ammoniumverbindung der allgemeinen Formel

$$HN^{+}R_3X^{-}$$

worin R eine Alkylgruppe mit bis zu 20 C-Atomen und $X^{-}$ ein Anion, insbesondere ein Chloridion, bedeuten.

Das erfindungsgemäß verwendete kationische Polymer (c) ist vorzugsweise ein Poly-(Diallyldimethylammoniumchlorid) und hat vorzugsweise ein Molekulargewicht entsprechend einer Viskosität von 500 bis 1500 mPa.s (Brookfield-Viskosität bei 15 % Feststoffgehalt, 20 UPM und Raumtemperatur).

Vorzugsweise stellt das kationische Polymer (c) eine polymere quaternäre Ammoniumverbindung nach

einem der folgenden Strukturtypen dar

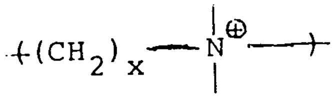
(I)

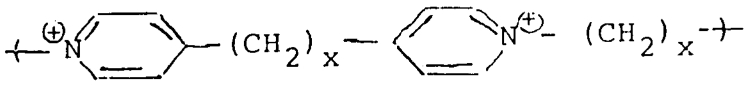
(II)

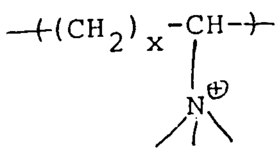
(III)

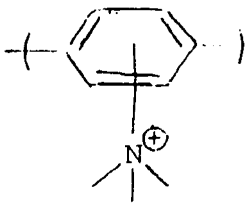
(IV)

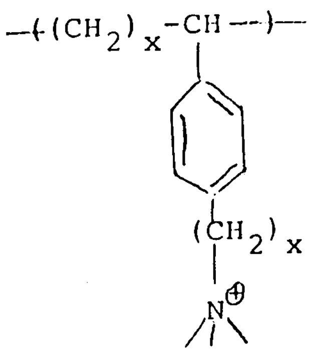
(V)

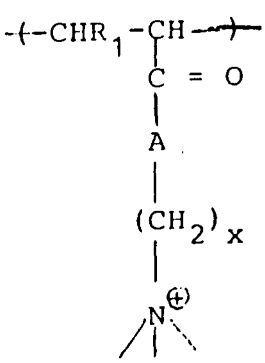
R = H oder eine niedere Alkylgruppe (z.B. mit 1 - 4 C-Atomen) (VI)

A = O oder NH

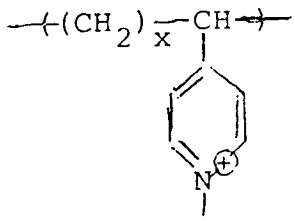

(VII)

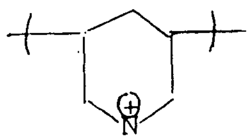

(VIII)

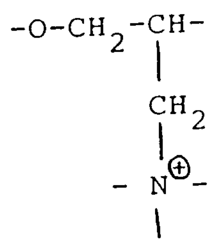

(IX)

worin x 1 bis 3 bedeutet.

Nach einer besonders bevorzugten Ausführungsform stellt das kationische Polymer (c) ein Poly-(diallylammoniumchlorid) oder ein Poly-(3,5-methylen-piperidiniumchlorid) dar, wobei die Stickstoffatome gegebenenfalls durch niedere Alkylgruppen substituiert sind.

Gegenstand der Erfindung ist ferner ein Verfahren zur Herstellung einer kationisch eingestellten Pigmentdispersion, wie sie vorstehend beschrieben ist; dieses Verfahren ist dadurch gekennzeichnet, daß man eine wäßrige Suspension der Pigmentteilchen (a) mit einem kationischen Polymer (b) umhüllt, bis das Zeta-Potential der die umhüllten Pigmentteilchen enthaltenen Dispersion einen Wert am isoelektrischen Punkt bzw. im kationischen Bereich erreicht hat, worauf man die umhüllten Pigmentteilchen gegebenenfalls mit dem kationischen Polymer (c) dispergiert.

Es ist also günstig, daß die Pigmentteilchen zunächst mit dem kationisierten Schutzkolloid (b) umhüllt werden, bevor sie mit dem Dispergier- und Umladungsmittel (c) dispergiert werden. In vielen Fällen, z.B. in sauren pH-Bereichen, reicht die Kationisierung durch das kationisierte Schutzkolloid (b), aus, so daß ein Zugabe des kationischen Dispergiermittels (c) entfallen kann.

Gegenstand der Erfindung ist ferner eine Streichfarbe für die Papierbeschichtung, die eine Pigmentdispersion, wie sie vorstehend beschrieben ist, und (d) ein Bindemittel oder Bindemittelgemisch zum Verbinden der dispergierten und mit dem kationisierten Polymer (b) umhüllten Pigmentteilchen (a) untereinander und mit der Papieroberfläche enthalt. Vorzugsweise ist das Bindemittel bzw. Bindemittelgemisch (d) auch im neutralen bzw. alkalischen Bereich kationisch oder amphoter. Amphotere Bindemittel werden im allgemeinen jedoch nur bei Streichfarben mit schwach sauren pH-Wert verwendet.

Erfindungsgemäß kann die Menge des Bindemittels (d) relativ niedrig gehalten werden, da bereits das Schutzkolloid (b) eine Co-Bindemittelfunktion hat.

Bevorzugte synthetische Bindemittel (d) sind Stryol-Butadienoder Styrol-Acrylat-Copolymere mit funktionellen kationischen Gruppen und/oder kationische Polyvinylacetate, kationische Polyvinylalkohole bzw. deren Copolymere.

Ferner kann das Bindemittel (d) aus der Gruppe der abgebauten und nativen Guars, Stärken, Methylcellulosen, Hydroxymethylcellulosen, Carboxymethylcellulosen, Alginate, Proteine und Polyvinylalkohole ausgewählt sein und in kationischer Form vorliegen. Proteine sind besonders für den schwach sauren Bereich geeignet, da sie wegen ihrer amphoteren Natur von vornherein eine kationische Ladung haben. Der isoelektrische Punkt liegt bei einem pH-Wert von 5 bis 6. Werden Proteine im alkalischen Bereich verwendet, so sollten sie leicht kationisiert sein (z.B. durch Koazervatbildung oder durch echte Kationisierung).

Bei Verwendung von Stärke muß diese sowohl für den sauren als auch für den alkalischen Bereich kationisiert vorliegen. Die Bindemittel beeinflussen auch die Wasserretention der Streichfarbe.

Es hat sich gezeigt, daß synthetische Bindemittel, die nur über das Emulgatorsystem kationisiert waren, also in ihrem eigenen Gerüst noch anionisch waren, für die genannten kationischen Streichfarben weniger geeignet sind.

Die erfindungsgemäße Streichfarbe kann ferner als Hilfsmittel kationische oder nicht ionogene Verdickungsmittel (z.B. Guar oder synthetische Verdickungsmittel), und/oder Wasserretentionshilfsmittel enthalten. Ferner kann die Streichfarbe Hilfsmittel, wie Gleitmittel (z.B. Fettsäurederivate, Wachse oder Paraffine in Emulsionsform), optische Aufheller (z.B. Stilben-Derivate) und/oder Naßverfestigungsmittel (z.B. kationische oder nichtionogene Harze) enthalten.

Eine bevorzugte Streichfarbe enthält die Komponenten, bezogen auf 100 Gewichtsteile trockenes Pigment (a) in folgenden Gewichtsanteilen:

| | Tiefdruck | Offset/Buchdruck |
|---|---|---|
| (b) Schutzkolloide | 0,1- 6,0 | 0,1 - 6,0 |
| (c) Dispergiermittel | 0,0- 3,0 | 0,0 - 3,0 |
| (d) Natürl.Bindemittel | 0,0-10,0 | 1,0 - 20,0 |
| (e) Synth.Bindemittel | 1,0- 7,0 | 1,0 - 15,0 |
| (f) Hilfsmittel wie oben angegeben | 0,2- 4,0 | 0,2 - 5,0 |
| (g) Naßverfestigungsmittel | 0,0- 3,0 | 0,0 - 5,0 |

Die erfindungsgemäße Streichfarbe wird vorzugsweise dadurch hergestellt, daß man die erfindungsgemäß Pigmentdispersion in einem geeigneten Mischaggregat vorlegt, das für den gewünschten Endfeststoffgehalt der Streichfarbe erforderliche Verdünnungswasser zusetzt und bei hoher Mischintensität das gegebenenfalls in einem separaten Arbeitsgang gelöste natürliche Bindemittel und/oder anschließend das synthetische Bindemittel zusetzt. Nach der Einarbeitung der Bindemittel werden, falls erforderlich, das Verdickungsmittel und das Wasserretentionshilfsmittel und anschließend die übrigen Hilfsmittel, wie Gleitmittel und im Bedarfsfall optische Aufheller und am Schluß das Naßverfestigungsmittel zugesetzt. Die angegebene Reihenfolge hat sich für die Herstellung einer agglomeratefreien, gut verarbeitbaren Streichfarbe besonders bewährt.

Die erfindungsgemäße Streichfarbe hat eine gute Haftung an der normalerweise negativ geladenen Papierfaser. Diese Eigenschaft kann man sich zunutze machen, indem man überschüssige Streichfarbe, z.B. bei einem Papiersortenwechsel, der Papiermasse als Füllstoff zusetzt. Im Gegensatz zu einer anionischen Streichfarbe, die mit kationischen Hilfsmitteln ungewollte Wechselwirkungen eingeht, kann die erfindungsgemäße kationische Streichfarbe bedenkenlos in den Papiermaschinenkreislauf gelangen, da die Wechselwirkung mit den kationischen Hilfsmitteln ausbleibt bzw. über diesen Weg Abwasserprobleme vermieden werden.

Ferner haben die erfindungsgemäßen Streichfarben, wenn sie der Papiermasse als Füllstoffe zugesetzt werden, die Nebenwirkung, daß sie auch die beim Holzaufschluß zur Herstellung von Papier anfallenden anionischen Abbauprodukte, wie Dextrine, Lignine, Hemicellulose usw. binden. Die anionischen Störstoffe werden an der kationisch eingestellten Pigmentgrenzfläche adsorbiert und mit dem Papier ausgetragen, so daß die Abwasserbelastung auch in dieser Hinsicht geringer wird.

Durch diese Adsorption werden die Rohpapiereigenschaften, wie Opazität, Festigkeit, Porosität usw. verbessert.

Die Erfindung ist durch die nachstehenden Beispiele erläutert:

Beispiel 1

Eine kationische Pigmentdispersion aus den nachstehend angegebenen Komponenten

Wasser für 70%ige Dispersion 248 g

15%ige kationisierte PVA-Lösung als Schutzkolloid (b) 430 g

Natürliches $CaCO_3$ (90 % < 2µm als Pigment (a)) 1500 g

11%ige Lösung von Poly-(Diallyldimethylammoniumchlorid) als Dispergiermittel (c) 68 g

wurde wie folgt hergestellt:

Das Calciumcarbonat wurde mit Wasser und der Schutzkolloidlösung versetzt und gründlich vermischt. Dann wurde die Dispergiermittellösung (c) zugesetzt, wodurch das zunächst anionische Pigment

(Zetapotential -30 mV) umgeladen wurde.

Die erhaltene Dispersion hatte folgende Eigenschaften:

| | |
|---|---|
| Feststoffgehalt | 70,2 Gew.-% |
| pH-Wert | 8,3 |
| Brookfield-Viskosität bei 50 UPM, Spindel 5, Raumtemperatur | 2320 mPa.s |
| Brookfield-Viskosität bei 100 UPM, Spindel 5, Raumtemperatur | 1720 mPa.s |
| Zeta-Potential | +21 mV |

Beispiel 2

Zur Herstellung einer kationischen Pigmentdispersion wurden zunächst 550 g einer 10%igen Polyvinylalkohollösung mit 230 g einer 24%igen wäßrigen kationischen Melamin-Formaldehydharz-Dispersion zusammengemischt, wobei sich eine kationisierte Schutzkolloid-Dispersion (b) bildete. 75 g dieser Dispersion wurden mit einer Mischung von 1500 g natürlichem $CaC0_3$ (90 % < 2μ) und 640 g Wasser vermischt. Das Zeta-Potential des Pigments vor dem Zusatz der Schutzkolloid-Dispersion (b) betrug -30 mV.

Die Eigenschaften der erhaltenen Dispersion waren wie folgt:

| | |
|---|---|
| Feststoffgehalt | 68 Gew.-% |
| pH-Wert | 7,4 |
| Brookfield-Viskosität bei 50 UPM, Spindel 4, Raumtemperatur | 400 mPa.s |
| Brookfield-Viskosität bei 100 UPM, Spindel 4, Raumtemperatur | 290 mPa.s |
| Zeta-Potential | +4 mV |

Beispiel 3

1500 g US-Kaolin (92 Gew.-% < 2 μm; Zeta-Potential -40 mV) wurden mit 660 g Wasser vermischt. Anschließend wurden 290 g einer 20%igen Polyvinylalkohollösung zugegeben und mit 65 g einer 45%igen Poly-(Diallyldimethylammoniumchlorid)-Lösung kationisiert.

Die Eigenschaften der erhaltenen Dispersion waren wie folgt:

| | |
|---|---|
| Feststoffgehalt | 63,0 Gew.-% |
| pH-Wert | 5,5 |
| Brookfield-Viskosität bei 50 UPM, Spindel 5, Raumtemperatur | 1880 mPa.s |
| Brookfield-Viskosität bei 100 UPM, Spindel 5, Raumtemperatur | 1016 mPa.s |
| Zeta-Potential | +35 mV |

Beispiel 4

1500 g $Al_20_3$ (80 Gew.-% < 0,5 μm) mit einem Zeta-Potential von +14 mV wurden mit 750 g Wasser versetzt. Das erhaltene Gemisch wurde mit 268 g der kationisierten Schutzkolloid-Dispersion (b) von Beispiel 2 versetzt. Die Eigenschaften der erhaltenen Dispersion waren wie folgt:

| | |
|---|---|
| Feststoffgehalt | 61,0 Gew.-% |
| pH-Wert | 9,2 |
| Brookfield-Viskosität bei 50 UPM, Spindel 4, Raumtemperatur | 680 mPa.s |
| Brookfield-Viskosität bei 100 UPM, Spindel 4, Raumtemperatur | 480 mPa.s |
| Zeta-Potential | +34 mV |

Beispiel 5

1500 g natürliches Calciumcarbonat gemäß Beispiel 1 wurden mit 600 g Wasser vermischt. Anschließend wurden 400 g einer handelsüblichen kationischen Maisstärke (25 %ige Lösung) als kationisches Schutzkolloid (b) eingemischt. Die Eigenschaften der erhaltenen Dispersion waren wie folgt:

| | |
|---|---|
| Feststoffgehalt | 63,7 Gew.-% |
| pH-Wert | 7,4 |
| Brookfield-Viskosität bei 50 UPM, Spindel 6, Raumtemperatur | 10800 mPa.s |
| Brookfield-Viskosität bei 100 UPM, Spindel 6, Raumtemperatur | 6800 mPa.s |
| Zeta-Potential | +7 mV |

Die kationische Stärke dient gleichzeitig als Co-Bindemittel und Wasserretentionshilfsmittel bei der

Streichfarbenherstellung, so daß die hohe Viskosität der Pigmentdispersion die Streichfarbenherstellung nicht beeinträchtigt.

Beispiel 6

1500 g natürliches Calciumcarbonat gemäß Beispiel 1 wurden mit 425 g Wasser vermischt. Anschließend wurden 230 g einer 20 %igen Polyvinylalkohollösung gleichzeitig mit 28 g einer 39%igen kationischen Acrylatpolymer-Lösung zugegeben, wobei das kationische Schutzkolloid (b) in situ gebildet wurde. Die Eigenschaften der erhaltenen Dispersion waren wie folgt:

| | |
|---|---|
| Feststoffgehalt | 71,4 Gew.-% |
| pH-Wert | 7,1 |
| Brookfield-Viskosität bei 50 UPM, Spindel 4, Raumtemperatur | 740 mPa.s |
| Brookfield-Viskosität bei 100 UPM, Spindel 4, Raumtemperatur | 660 mPa.s |
| Zeta-Potential | + 12 mV |

Vergleichsbeispiel 1

Eine kationische Pigmentdispersion aus den nachstehend angegebenen Bestandteilen

| | |
|---|---|
| Wasser für 64,2%ige Dispersion | 625 g |
| natürliches Calciumcarbonat gemäß Beispiel 1 (90 % < 2µm) als Pigment (a) | 1500 g |
| 11%ige Lösung von Poly-(Diallyldimethylammoniumchlorid) als Dispergiermittel (c) | 220 g |

wurde wie folgt hergestellt.

Es wurde zunächst ein Gemisch aus Wasser und Pigment gebildet, welchem die Dispergiermittellösung zugesetzt wurde. Ein Schutzkolloid wurde in diesem Beispiel nicht verwendet.

Die erhaltene Dispersion hatte folgende Eigenschaften:

| | |
|---|---|
| Feststoffgehalt | 64,2 Gew.-% |
| pH-Wert | 7,3 |
| Brookfield-Viskosität bei 50 UPM, Spindel 5, Raumtemperatur | 9800 mPa.s |
| Brookfield-Viskosität bei 100 UPM, Spindel 5, Raumtemperatur | 5700 mPa.s |
| Zeta-Potential | +20 mV |

Aufgrund der hohen Viskosität der Pigmentdispersion wurde keine Streichfarbe hergestellt.

Vergleichsbeispiel 2

Eine kationische Pigmentdispersion aus den nachstehend angegebenen Komponente

| | |
|---|---|
| Wasser für 68,5 %ige Dispersion | 689 g |
| Natürliches $CaC0_3$ (90 % < 2µm) gemäß Beispiel 1 als Pigment (a) | 1500 |
| Handelsüblicher kationischer Guar | 2,8 g |

wurde wie folgt hergestellt:

Der Guar wurde mit dem Wasser vorgelegt, worauf das Pigment (a) zugesetzt wurde.

Die Eigenschaften der erhaltenen Dispersion waren wie folgt:

| | |
|---|---|
| Feststoffgehalt | 68,5 Gew.-% |
| pH-Wert | 7,6 |
| Brookfield-Viskosität bei 50 UPM Spindel 5, Raumtemperatur | 640 mPa.s |
| Brookfield-Viskosität bei 100 UPM Spindel 5, Raumtemperatur | 400 mPa.s |
| Zeta-Potential | -10 mV. |

Der verwendete kationische Guar entsprach den in der Literaturstelle "Wochenblatt für Papierfabrikation" 6, (1984), Seite 176 bei 183 beschriebenen Typ, der mit Phosphaten und Citraten abgebaut war. Das Zeta-Potential der erhaltenen Dispersion war mit -10 mV noch stark negativ, d.h. die Dispersion war anionisch eingestellt. Eine daraus mit einem kationischen Binder hergestellte Streichfarbe flockte aus und war unbrauchbar. Es mußte daher eine größere Menge an Poly-(Diallyldimethylammoniumchlorid) (1 Gew.-% Trockensubstanz, bezogen auf trockenes Pigment) zugesetzt werden, um eine Umladung zu erzielen. Bei Zusatz von kationischer Polyaminoamid-Fettsäure (1 Gew.-%) trat zusätzlich ein starkes Schäumen auf, so daß keine verwertbare Streichfarbe hergestellt werden konnte.

Beispiel 7

Herstellung kationischer Streichfarben:

Mit den Pigmentdispersionen nach den Beispielen 1, 2, 3 und 5 wurden Streichfarben hergestellt, deren Zusammensetzung in der nachstehenden Tabelle angegeben ist. Aluminiumoxide (Beispiel 4) werden üblicherweise nur als Verschnittpigmente verwendet.

| | 1 (G.T.) | 2 (G.T.) | 3 (G.T.) | 5 (G.T) | VB2 (G.T. |
|---|---|---|---|---|---|
| $CaCO_3$-Dispersion (Beisp. 1) | 100 | | | | |
| $CaCO_3$-Dispersion (Beisp. 2) | | 100 | | | |
| US-Kaolin-Dispers. (Beisp. 3) | | | 100 | | |
| $CaCO_3$-Dispersion (Beisp. 5) | | | | 100 | |
| $CaCO_3$-Dispersion (VB 2) | | | | | 100 |
| Dispergiermittel (c) | - | 0,35 | - | - | 1,0 |
| Kationische Stärke | 3,0 | 3,0 | 3,0 | - | - |
| Kationischer Kunststoffbinder | 5,0 | 9,0 | 5,0 | 5,0 | 12,0 |
| Gleitmittel | 0,4 | 0,4 | 0,4 | 0,4 | 0,4 |
| Wasserretentionsmittel | - | 0,6 | - | - | 1,0 |
| nichtionogener Naßverfestiger | 1,5 | 1,5 | 1,5 | 2,5 | 0,8 |
| Meßergebnisse | | | | | |
| Feststoffgehalt % | 64,4 | 57,4 | 57,6 | 53,5 | 54,9 |
| pH-Wert | 8,1 | 7,2 | 7,2 | 8,1 | 7,8 |
| Wasserretention sec | 115 | 36 | 130 | 70 | 30 |
| Brookfield 50 UPM mPa.s | 2000 | 1760 | 1160 | 2640 | 1960 |
| (Spindel 4)100UPM mPa.s | 1410 | 1060 | 760 | 1520 | 1080 |
| High-shear-Visk. mPa.s | 94 | 30 | 63 | 29 | 16 |
| Zeta-Potential mV | + 12 | + 27 | + 43 | + 13 | + 14 |

Zur Herstellung einer kationischen (Zeta-Potential + 14 mV) Streichfarbe aus der Pigmentdispersion gemäß Vergleichsbeispiel 2 war ein wirtschaftlich unvertretbar hoher Anteil an Dispergiermittel (c) und kationischem Kunststoffbinder erforderlich. Nach kurzer Laufzeit dickte die Streichfarbe so stark ein, daß eine weitere Verarbeitung nicht mehr möglich war. Die Naßrupffestigkeit und Offset-Bedruckbarkeit der daraus hergestellten Papiere waren unzureichend. Die erfindungsgemäßen Streichfarben dickten auch nach längerer Verarbeitung nicht ein. Papiere mit den erfindungsgemäßen Streichfarben zeichneten sich durch eine gleichmäßige geschlossene Oberfläche, eine gute Faserabdeckung, eine hohe Opazität und ein hohes Strichvolumen aus. Die Naßrupffestigkeit und Offset-Bedruckbarkeit waren gut.

## Patentansprüche

1. Kationisch eingestellte Pigmentdispersion, insbesondere zur Herstellung von Streichfarben zur Papierbeschichtung, gekennzeichnet durch
   (a) eine Pigmentkomponente;
   (b) ein die Pigmentteilchen als Schutzkolloid umhüllendes kationisiertes Polymer, das aus hydrophilen Polyacrylaten oder -methacrylate, abgebauten Stärken oder abgebauten modifizierten Stärken, Methylcellulosen, Hydroxymethylcellulosen, Carboxymethylcellulosen, abgebauten Alginaten, Proteinen und/oder Polyvinylalkohol erhalten worden ist, wobei durch das kationisierte Polymer das Zeta-Potential der die umhüllten Pigmentteilchen enthaltenden Dispersion auf den isoelektrischen Punkt bzw. in den kationischen Bereich angehoben ist;
(c) und gegebenenfalls ein kationisches Polymer bzw. eine quaternäre Ammoniumverbindung als Dispergiermittel für die mit dem Schutzkolloid umhüllten und kationisch umgeladenen Pigmentteilchen.

**2.** Pigmentdispersion nach Anspruch 1, dadurch gekennzeichnet, daß das kationisierte Polymer (b) durch Umsetzung der hydrophilen Ausgangspolymeren mit ursprünglich anionischem Charakter aus der Gruppe der Polyacrylate und -methacrylate, abgebauten Stärken oder abgebauten modifizierten Stärken, Methylcellulosen, Hydroxymethylcellulosen, Carboxymethylcellulosen, abgebauten Alginaten, Proteinen und/oder Polyvinylalkohol mit (1) einer quaternären Ammoniumverbindung der allgemeinen Formel

$HN^{+}R_3X^{-}$

worin R eine Alkylgruppe mit bis zu 20 C-Atomen und $X^{-}$ ein Anion, insbesondere ein Chloridion, bedeuten, oder (2) mit einem oder mehreren kationischen Polymeren aus der Gruppe der Melamin-Formaldehydharze, Epichlorhydrinharze, Dicyandiamidharze, quaternären Acrylate, der polymeren Diallylverbindungen oder der polymeren Guanidinverbindungen erhalten worden ist.

**3.** Pigmentdispersion nach Anspruch 1 oder 2, dadurch gekennzeichnet, daß die Pigmentkomponente (a) aus gemahlenem bzw. gefälltem Calciumcarbonat, Kaolin, calciniertem Kaolin, Titandioxid, Zinkoxid, Satinweiß, Aluminiumhydrosilicat, bzw. aus deren Abmischungen zusammengesetzt ist.

**4.** Pigmentdispersion nach einem der Ansprüche 1 bis 3, dadurch gekennzeichnet, daß das kationische Polymer (c) ein Melamin-Formaldehydharz, Epichlorhydrinharz, Dicyandiamidharz, quaternäres Acrylat bzw. eine polymere Diallylverbindung, oder eine polymere Guanidinverbindung darstellt.

**5.** Pigmentdispersion nach einem der Ansprüche 1 bis 4, dadurch gekennzeichnet, daß das kationische Polymer quaternäre Hydrocarbylammoniumgruppen enthält.

**6.** Pigmentdispersion nach einem der Ansprüche 1 bis 5, dadurch gekennzeichnet, daß das kationische Polymer (c) ein Poly-(Diallyldimethylammoniumchlorid) ist und vorzugsweise ein Molekulargewicht entsprechend einer Viskosität von 500 bis 1500 mPa.s (Brookfield-Viskosität bei 15 % Feststoffgehalt, 20 Upm und Raumtemperatur) aufweist.

**7.** Pigmentdispersion nach einem der Ansprüche 1 bis 6, dadurch gekennzeichnet, daß das kationische Polymer (c) eine polymere quaternäre Ammoniumverbindung nach einem der folgenden Strukturtypen darstellt:

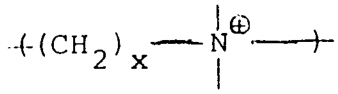 (I)

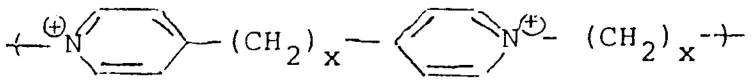 (II)

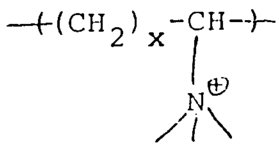 (III)

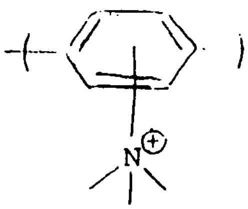 (IV)

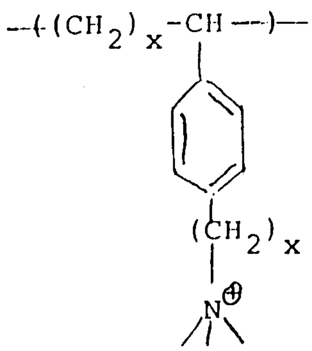 (V)

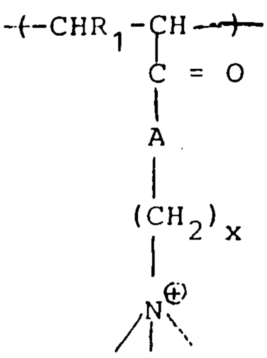

R = H oder eine niedere Alkylgruppe (z.B. mit 1 - 4 C-Atomen) (VI)

A = 0 oder NH

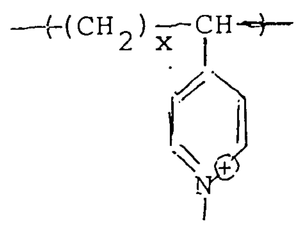

(VII)

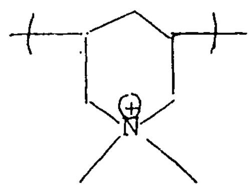

(VIII)

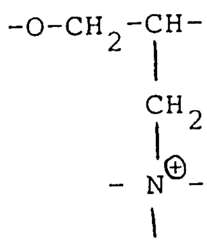

(IX)

worin x 1 bis 3 bedeutet.

8. Pigmentdispersion nach einem der Ansprüche 1 bis 7, dadurch gekennzeichnet, daß das kationische Polymer (c) ein Poly-(diallyl-ammoniumchlorid) oder ein Poly-(3,5-methylenpiperidiniumchlorid) darstellt, wobei die Stickstoffatome gegebenenfalls durch niedere Alkylgruppen substituiert sind.

9. Verfahren zur Herstellung einer kationisch eingestellten Pigmentdispersion nach einem der Ansprüche 1 bis 8, dadurch gekennzeichnet, daß man eine wäßrige Suspension der Pigmentteilchen (a) mit einem kationisierten Polymer (b) umhüllt, bis das Zeta-Potential der die umhüllten Pigmentteilchen enthaltenen Dispersion einen Wert am isoelektrischen Punkt bzw. im kationischen Bereich erreicht hat, worauf man die umhüllten Pigmentteilchen gegebenenfalls mit dem kationischen Polymer (c) dispergiert.

10. Streichfarbe für die Papierbeschichtung, enthaltend eine Pigmentdispersion nach einem der Ansprüche 1 bis 8 und (d) ein Bindemittel oder Bindemittelgemisch zum Verbinden der dispergierten und mit dem kationisierten Polymer (b) umhüllten Pigmentteilchen (a) untereinander und mit der Papieroberfläche.

11. Streichfarbe nach Anspruch 10, dadurch gekennzeichnet, daß das Bindemittel bzw. Bindemittelgemisch (d) auch im neutralen bzw. alkalischen Bereich kationisch oder amphoter ist.

12. Streichfarbe nach Anspruch 10 oder 11, dadurch gekennzeichnet, daß das Bindemittel ein Styrol-Butadien- oder Styrol-Acrylat-Copolymer mit funktionellen kationischen Gruppen und/oder ein kationisches Polyvinylacetat, einen kationischen Polyvinylalkohol bzw. deren Copolymere darstellt.

13. Streichfarbe nach Anspruch 10 oder 11, dadurch gekennzeichnet,daß das Bindemittel aus der Gruppe der abgebauten und nativen Guars, Stärken, Methylcellulosen, Hydroxymethylcellulosen, Carboxymethylcellulosen, Alignate, Proteine und Polyvinylalkohole ausgewählt ist und in kationischer Form vorliegt.

14. Streichfarbe nach einem der Ansprüche 10 bis 13, dadurch gekennzeichnet, daß sie kationische oder nichtionogene Verdickungsmittel und/oder Wasserretentionshilfsmittel enthält.

15. Streichfarbe nach einem der Ansprüche 10 bis 14, dadurch gekennzeichnet, daß sie Hilfsmittel wie

Gleitmittel, optische Aufheller und/oder Naßverfestigungsmittel enthält.

**16.** Streichfarbe nach einem der Ansprüche 10 bis 15, dadurch gekennzeichnet, daß sie die Komponenten, bezogen auf 100 Gewichtsteile trockenes Pigment (a), in folgenden Gewichts-Anteilen enthält:

| | Tiefdruck | Offset/Buchdruck |
|---|---|---|
| (b) Schutzkolloide | 0,1- 6,0 | 0,1 - 6,0 |
| (c) Dispergiermittel | 0,0- 3,0 | 0,0 - 3,0 |
| (d) Natürl.Bindemittel | 0,0-10,0 | 1,0 - 20,0 |
| (e) Synth.Bindemittel | 1,0- 7,0 | 1,0 - 15,0 |
| (f) Hilfsmittel gemäß Anspr.14 u/o 15 | 0,2- 4,0 | 0,2 - 5,0 |
| (g) Naßverfestigungsmittel | 0,0- 3,0 | 0,0 - 5,0 |

**17.** Papier, dadurch gekennzeichnet, daß es
(a) mit einer Streichfarbe nach einem der Ansprüche 10 bis 16 beschichtet und/oder
(b) mit einer Pigmentdispersion nach einem der Ansprüche 1 bis 9 gefüllt ist.

## Claims

**1.** A cationically adjusted pigment dispersion, especially for the preparation of coating inks for application to paper, characterised by
(a) a pigment constituent and
(b) a cationised polymer that encapulates the pigment particles as a protective colloid and is obtained from hydrophilic polyacrylates or polymethacrylates, decomposed starches or decomposed modified starches, methylcelluloses, hydroxymethylcelluloses, carboxymethylcelluloses, decomposed alginates, proteins and/or polyvinyl alcohol, wherein the cationised polymer increases the zeta potential of the dispersion containing the encapsulated pigment particles to the isoelectric point or into the cationic range.
(c) and, optionally, a cationic polymer or a quaternary ammonium compound as a dispersant for the pigment particles encapsulated in the protective colloid and cationically charge-reversed.

**2.** A pigment dispersion according to claim 1, characterised in that the cationised polymer (b) is obtained by converting the hydrophilic starting polymers of an originally anionic character from the group comprising the polyacrylates and polymethacrylates, decomposed starches or decomposed modified starches, methylcelluloses, hydroxymethylcelluloses, carboxymethylcellusoses, decomposed alginates, proteins and/or polyvinyl alcohol with (1) a quarternary ammonium compound of the general formula

$$HN^{+}R_3X^{-}$$

wherein R represents an alkyl group with up to 20 carbon atoms and $X^{-}$ represents an anion, in particular a chloride ion, or (2) with one or more cationic polymers from the group comprising melamine formaldehyde resins, epichlorohydrin resins, dicyandiamide resins, quaternary acrylates, the polymeric diallyl compounds and the polymeric guanidine compounds.

**3.** A pigment dispersion according to claim 1 or 2, characterised in that the pigment constituent (a) is composed of ground and/or precipitated calcium carbonate, kaolin, calcined kaolin, titanium dioxide, zinc oxide, satin white, aluminum hydrosilicate or mixtures thereof.

**4.** A pigment dispersion according to any one of claims 1 to 3, characterised in that the cationic polymer (c) is a melamine formaldehyde resin, epichlorohydrin resin, dicyandiamide resin, quaternary acrylate and/or a polymeric diallyl compound or a polymeric guanidine compound.

**5.** A pigment dispersion according to any one of claims 1 to 4, characterised in that the cationic polymer contains quaternary hydrocarbylammonium groups.

**6.** A pigment dispersion according to any one of claims 1 to 5, characterised in that the cationic polymer

(c) is a poly-(diallyldimethylammonium chloride) and, preferably, it has a molecular weight corresponding to a viscosity of 500 to 1500 mPa.s (Brookfield viscosity at a 15% solids content, 20 rpm and room temperature).

**7.** A pigment dispersions according to any one of claims 1 to 6, characterised in that the cationic polymer (c) is a polymeric quaternary ammonium compound having one of the following structures

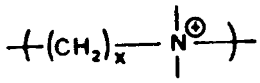

(I)

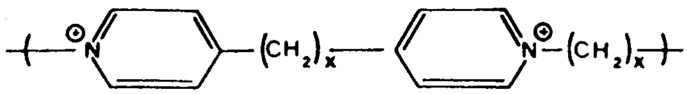

(II)

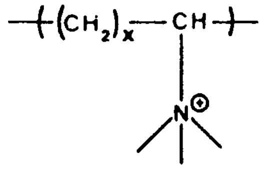

(III)

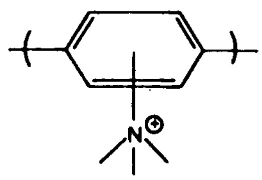

(IV)

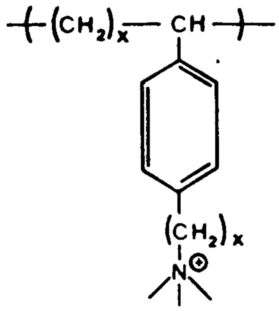

(V)

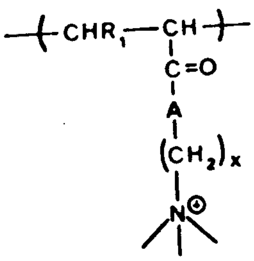

R = H or a lower (VI)
alkyl group (e.g having 1-4 carbon atoms)
A = O or NH

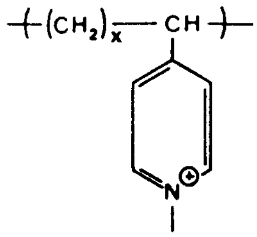

(VII)

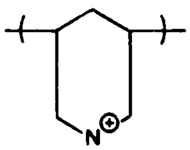

(VIII)

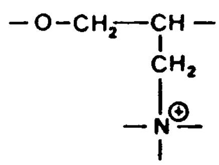

(IX)

where x is 1 to 3.

**8.** A pigment dispersion according to any one of claims 1 to 7, characterised in that the cationic polymer (c) is a poly-(diallylammonium chloride) or a poly-(3,5-methylene-piperidinium chloride), wherein the nitrogen atoms are optionally substituted with lower alkyl groups.

**9.** A method for preparing a cationically adjusted pigment dispersion according to any one of claims 1 to 8, characterised by encapsulating an aqueous suspension of the pigment particles (a) with a cationised polymer (b) until the zeta potential of the dispersion containing the encapsulated pigment particles attains a value at the isoelectric point or in the cationic range, whereupon the encapsulated pigment particles are optionally dispersed with the cationic polymer (c).

**10.** A coating ink for application paper, containing a pigment dispersion according to any one of claims 1 to 8 and (d) a binder or mixture of binders for binding the dispersed pigment particles (a) and those which have been encapsulated in the cationised polymer (b) together and to the surface of the paper.

**11.** A coating ink according to claim 10, characterised in that the binder or mixture of binders (d) is also cationic or amphoteric in the neutral or alkaline range.

**12.** A brushing ink according to claim 10 or 11, characterised in that the binder is a styrene-butadiene or styrene-acrylate copolymer with functional cationic groups and/or a cationic polyvinyl acetate, a cationic polyvinyl alcohol or their copolymers.

**13.** A coating ink according to claim 10 or 11, characterised in that the binder is selected from the group of decomposed and natural guars, starches, methylcelluloses, hydroxymethylcelluloses, carboxymethylcelluloses, alginates, proteins and polyvinyl alcohols and is present in a cationic form.

**14.** A coating ink according to any one of claims 10 to 13, characterised in that it contains cationic or non-ionogenic thickeners and/or water-retention additives.

**15.** A coating ink according to any one of claims 10 to 14, characterised in that it contains additives such as lubricants, optical brighteners and/or wet-strength promoters.

**16.** A coating ink according to any one of claims 10 to 15, characterised in that it contains the following parts by weight, based on 100 parts by weight of dry pigment (a), of the constituents:

| | Photogravure | Offset/ Letterpress |
|---|---|---|
| (b) Protective colloids | 0.01 - 6.0 | 0.1 - 6.0 |
| (c) Dispersants | 0.0 - 3.0 | 0.0 - 3.0 |
| (d) Natural binders | 0.0 - 10.0 | 1.0 - 20.0 |
| (e) Synthetic binders | 1.0 - 7.0 | 1.0 - 15.0 |
| (f) Additives acc. to cl. 14 and/or 15 | 0.2 - 4.0 | 0.2 - 5.0 |
| (g) Wet-strength promoters | 0.0 - 3.0 | 0.0 - 5.0 |

**17.** A paper, characterised in that it is
(a) coated with a coating ink according to any one of claims 10 to 16, and/or
(b) filled with a pigment dispersion according to any one of claims 1 to 9.

## Revendications

**1.** Dispersion pigmentaire ajustée pour être cationique, en particulier pour la fabrication de colorants d'enduction pour le couchage du papier, caractérisée par :
(a) un composant pigmentaire ;
(b) un polymère rendu cationique qui enrobe les particules de pigment en tant que colloïde protecteur et qui a été obtenu à partir de polyacrylates ou -méthacrylates hydrophiles, d'amidons dégradés ou d'amidons modifiés dégradés, de méthylcelluloses, d'hydroxyméthylcelluloses, de carboxyméthylcelluloses, d'alginates dégradés, de protéines et/ou d'alcool polyvinylique, où, par le polymère rendu cationique, le potentiel zêta de la dispersion contenant les particules de pigment enrobées est élevé au point isoélectrique ou dans la zone cationique ;
(c) et, le cas échéant, un polymère cationique ou un composé d'ammonium quaternaire en tant qu'agent dispersant pour les particules de pigment enrobées du colloïde protecteur et chargées cationiquement.

**2.** Dispersion pigmentaire selon la revendication 1, caractérisée par le fait que le polymère cationique (b) a été obtenu par réaction des polymères de départ hydrophiles ayant un caractère initialement anionique, appartenant au groupe des polyacrylates et -méthacrylates, des amidons dégradés ou des amidons modifiés dégradés, des méthylcelluloses, des hydroxyméthylcelluloses, des carboxyméthylcelluloses, des alginates dégradés, des protéines et/ou de l'alcool polyvinylique avec (1) un composé d'ammonium quaternaire représenté par la formule générale :

$$HN^{+}R_3X^{-}$$

où :
- R représente un groupe alkyle ayant jusqu'à 20 atomes de C ; et
- $X^{-}$ représente un anion, en particulier, un ion chlorure,

ou (2) avec un ou plusieurs polymère(s) cationique(s) appartenant au groupe des résines mélamine-formaldéhyde, des résines d'épichlorhydrine, des résines de dicyanodiamide, des acrylates quaternaires, des composés diallyliques polymères ou des composés de guanidine polymères.

**3.** Dispersion pigmentaire selon l'une des revendications 1 ou 2, caractérisée par le fait que le composant pigmentaire (a) est composé de carbonate de calcium, broyé ou précipité, de kaolin, de kaolin calciné, de dioxyde de titane, d'oxyde de zinc, de blanc brillant, d'hydrosilicate d'aluminium ou de leurs mélanges.

**4.** Dispersion pigmentaire selon l'une des revendications 1 à 3, caractérisée par le fait que le polymère cationique (c) est constitué par une résine mélamineformaldéhyde, une résine d'épichlorohydrine, une résine de dicyanodiamide, un acrylate quaternaire ou un composé diallylique polymère, ou un composé de guanidine polymère.

**5.** Dispersion pigmentaire selon l'une des revendications 1 à 4, caractérisee par le fait que le polymère cationique contient des groupes hydrocarbylammonium quaternaires.

6. Dispersion pigmentaire selon l'une des revendications 1 à 5, caractérisée par le fait que le polymère cationique (c) est un poly(chlorure de diallyl diméthyl ammonium) et présente, de préférence, une masse moléculaire correspondant à une viscosité de 500 à 1500 mPa.s (viscosité Brookfield pour une teneur en matières solides de 15%, 20 tpm et température ambiante).

7. Dispersion pigmentaire selon l'une des revendications 1 à 6, caractérisée par le fait que le polymère cationique (c) est constitué par un composé d'ammonium quaternaire polymère selon l'un des types structuraux suivants :

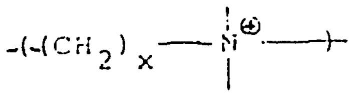

(I)

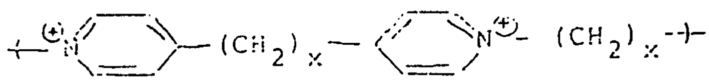

(II)

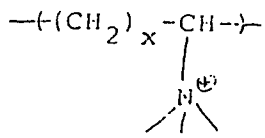

(III)

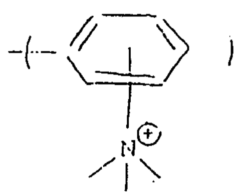

(IV)

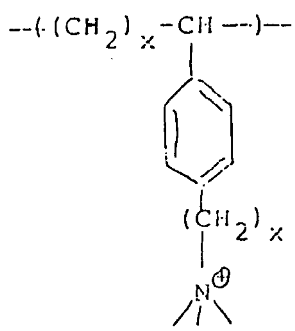

(V)

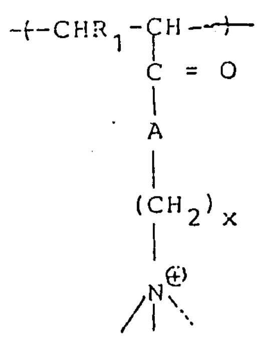

(VI)

avec R = H ou un groupe alkyle inférieur (par exemple avec 1-4 atomes de carbone)
A = O ou NH

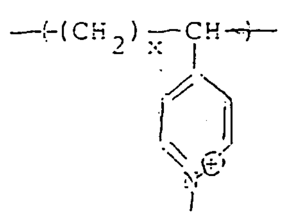

(VII)

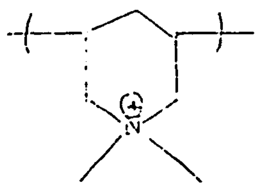

(VIII)

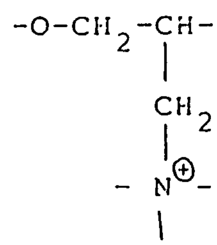

(IX)

où x vaut 1 à 3.

**8.** Dispersion pigmentaire selon l'une des revendications 1 à 7, caractérisée par le fait que le polymère cationique (c) est constitué par un poly(chlorure de diallyl ammonium) ou un poly (chlorure de 3,5-méthylène-pipéridinium), où les atomes d'azote sont, le cas échéant, substitués par des groupes alkyle inférieurs.

**9.** Procédé de fabrication d'une dispersion pigmentaire ajustée pour être cationique, telle que définie à l'une des revendications 1 à 8, caractérisé par le fait qu'on enrobe une suspension aqueuse des particules de pigment (a) par un polymère rendu cationique (b), jusqu'à ce que le potentiel zêta de la dispersion contenant les particules de pigments enrobées ait atteint une valeur au point isoélectrique ou dans la zone cationique, sur quoi on disperse les particules de pigment enrobées, le cas échéant, avec le polymère cationique (c).

**10.** Colorant d'enduction pour le couchage du papier, contenant une dispersion pigmentaire telle que définie à l'une des revendications 1 à 8 et (d) un liant ou un mélange de liants pour lier entre elles et à la surface du papier, les particules de pigment (a) dispersées et enrobées du polymère rendu cationique (b).

**11.** Colorant d'enduction selon la revendication 10, caractérisé par le fait que le liant ou le mélange de liants (d) est cationique ou amphotère également dans la zone neutre ou alcaline.

**12.** Colorant d'enduction selon l'une des revendications 10 ou 11, caractérisé par le fait que le liant est constitué par un copolymère styrène-butadiène ou un copolymère styrène-acrylate ayant des groupes cationiques fonctionnels et/ou un poly(acétate de vinyle) cationique, un alcool polyvinylique cationique ou leurs copolymères.

**13.** Colorant d'enduction selon l'une des revendications 10 ou 11, caractérisé par le fait que le liant est choisi dans le groupe de la gélose dégradée et native, des amidons, des méthylcelluloses, des hydroxyméthycelluloses, des carboxyméthylcelluloses, des alginates, des protéines et des alcools polyvinyliques et se présente sous une forme cationique.

**14.** Colorant d'enduction selon l'une des revendications 10 à 13, caractérisé par le fait qu'il contient des agents épaississants et/ou adjuvants de rétention d'eau cationiques ou non-ionogènes.

**15.** Colorant d'enduction selon l'une des revendications 10 à 14, caractérisé par le fait qu'il contient des adjuvants comme des lubrifiants, des agents d'azurage optique et/ou des agents de stabilisation à l'état humide.

**16.** Colorant d'enduction selon l'une des revendications 10 à 15, caractérisé par le fait qu'il contient les composants, par rapport à 100 parties en poids du pigment sec (a), dans les fractions pondérales suivantes :

| | Héliogravure | Impression offset/typo |
|---|---|---|
| (b) Colloïdes protecteurs | 0,1 - 6,0 | 0,1 - 6,0 |
| (c) Agents de dispersion | 0,0 - 3,0 | 0,0 - 3,0 |
| (d) Liants naturels | 0,0 - 10,0 | 1,0 - 20,0 |
| (e) Liants synthétiques | 1,0 - 7,0 | 1,0 - 15,0 |
| (f) Adjuvants tels que définis à la revendication 14 et/ou 15 | 0,2 - 4,0 | 0,2 - 5,0 |
| (g) Agents de stabilisation à l'état humide | 0,0 - 3,0 | 0,0 - 5,0 |

**17.** Papier caractérisé par le fait que :

(a) il est revêtu par un colorant d'enduction tel que défini à l'une des revendications 10 à 16, et/ou

(b) il est couvert par une dispersion pigmentaire telle que définie à l'une des revendications 1 à 9.